# EUROPÄISCHE PATENTSCHRIFT

(11) **EP 3 506 469 B1**
(45) Veröffentlichungstag und Bekanntmachung des Hinweises auf die Patenterteilung: **09.02.2022**
(21) Anmeldenummer: 18212347.1
(22) Anmeldetag: 13.12.2018
(51) Int. Cl.: H02K 15/095

(54) **WICKELMASCHINE**
COILING MACHINE
BOBINEUSE

(30) Priorität: 28.12.2017 DE 102017223859
(43) Veröffentlichungstag der Anmeldung: 03.07.2019
(73) Patentinhaber: Robert Bosch GmbH, 70442 Stuttgart (DE); Aumann Espelkamp GmbH, 32339 Espelkamp (DE)
(72) Erfinder: HUBER, Michael, 77815 Bühl (DE); BURGER, Timo, 76534 Baden-Baden (DE); MELCHERS, Michael, verstorben (DE); HAGEDORN, Jürgen, 32312 Lübbecke (DE)
(74) Vertreter: Hoefer & Partner Patentanwälte mbB

(56) Entgegenhaltungen:
- EP-A2- 1 962 411
- EP-A2- 2 015 427
- DE-A1-102014 006 406

## Beschreibung

### Stand der Technik

Die vorliegende Erfindung betrifft eine Wickelmaschine zum Erstellen von Wicklungen eines Elektromotors. Außerdem betrifft die Erfindung ein Verfahren zum Herstellen einer Wicklung eines Elektromotors. Eine Wickelmaschine gemäß dem Oberbegriff des Anspruchs 1 ist aus der EP 2 015 427 A2 bekannt. Eine weitere Wickelmaschine ist aus der DE 10 2014 006 406 A1 sowie aus der EP 1 962 411 A2 bekannt. Aus dem Stand der Technik ist bekannt, dass Grundkörper von Rotoren oder Statoren mit einer Wicklung versehen werden, um Elektromotoren herzustellen. Hierzu weist der Grundkörper Zähne auf, die durch Nuten im Grundkörper gebildet sind. Insbesondere ist die Nadelwicklungstechnik bekannt, um Statoren im Vollblechschnitt zu bewickeln. Unter Vollblechschnitt ist zu verstehen, dass der Statorgrundkörper als Ganzes gefertigt wird und nicht segmentiert ist.

Ist der Stator segmentiert, so lässt sich eine Wicklung auf jeden Zahn separat aufwickeln, wobei anschließend ein Zusammensetzen des Stators notwendig ist. Zwar lassen sich so hohe Nutfüllfaktoren erreichen, allerdings ist eine hohe Komplexität bezüglich Produktdesign und Prozesskette vorhanden. Der Nutfüllfaktor beschreibt das Verhältnis von Nutfläche zur Gesamtfläche des die Wicklung darstellenden Drahts im Querschnitt des Grundkörpers. Die Nutfläche entspricht der Querschnittsfläche, die durch zwei benachbarte Zähne begrenzt wird. Der Nutfüllfaktor sagt somit aus, in welchem Maße der vorhandene Raum für die Wicklung genutzt wurde.

Bei der Nadelwickeltechnik fährt eine Nadel mit einer Düse zur Ausgabe des zu wickelnden Drahts in radialer Richtung des Stators in die Nut zwischen zwei Zähnen und entlang der Nut. Auf diese Weise kann der Draht in der Nut platziert werden. Allerdings wird die Düse durch dieses Bewegen an benachbarten, bereits bewickelten Zähnen vorbeigeführt. Es muss sichergestellt sein, dass ein Freiraum zwischen den Spulen vorgesehen ist. Insgesamt sollte ein minimaler Freiraum von etwa dem 2,5-fachen des Drahtdurchmessers verbleiben.

### Offenbarung der Erfindung

Die erfindungsgemäße Wickelmaschine und das erfindungsgemäße Verfahren ermöglichen ein Erhöhen der Anzahl von Windungen auf einem Zahn, wodurch ein Nutfüllfaktor vergrößert wird. Während bei herkömmlichen Nadelwickeltechniken der Nutfüllfaktor etwa 30% beträgt, wird der Nutfüllfaktor gemäß der erfindungsgemäßen Wickelmaschine oder dem erfindungsgemäßen Verfahren auf mindestens 40% gesteigert. Dies wird insbesondere dadurch erreicht, dass sämtliche Lagen der Wicklung eines Zahns geordnet aufgebracht werden, wobei besonders vorteilhaft zwei Haltefinger als Hilfsmittel zur Positionierung der Windungen verwendet wird.

Die erfindungsgemäße Wickelmaschine umfasst ein Aufnahmeelement und einen Nadelwickelkopf. Das Aufnahmeelement dient zum Aufnehmen eines Grundkörpers eines Rotors oder eines Stators. Der Grundkörper umfasst Zähne, auf die eine Wicklung aufgewickelt werden soll. Insbesondere ist der Grundkörper im Vollblechschnitt hergestellt, das bedeutet, der Grundkörper ist nicht segmentiert. Der Nadelwickelkopf weist einen Nadelträger auf, an dem eine Düse angebracht ist. Die Düse ist nadelförmig ausgebildet und erstreckt sich von dem Nadelwickelkopf weg. Dadurch ist ermöglicht, die Düse durch den Nadelwickelkopf in eine Nut zwischen zwei Zähnen des Grundkörpers einzuführen. Über die Düse ist ein zu wickelnder Draht ausgebbar. Durch den Nadelwickelkopf, insbesondere durch die Düse, ist der Draht parallel zu einer Oberfläche jedes Zahns durch den Grundkörper und damit entlang der Nut führbar, um den Draht innerhalb einer Nut zwischen zwei Zähnen des Grundkörpers abzulegen. Auf diese Weise ist jeder Zahn mit dem Draht umwickelbar.

Die Düse ist schräg in der Nut anordenbar. Dies bedeutet, dass ein Abstand der Düse zu dem zu bewickelnden Zahn geringer ist als zu einem die Nut begrenzenden benachbarten Zahn. Die Nut, in der der Draht abgelegt werden soll, wird durch zwei Zähne begrenzt. Dies sind der zu bewickelnde Zahn und der benachbarte Zahn. Da der benachbarte Zahn für die Wicklung auf dem zu bewickelnden Zahn keinen Einfluss hat, ist das schrägstellen der Düse innerhalb der Nut ermöglicht, um somit die Bewicklung des zu bewickelnden Zahns zu vereinfachen. Durch den geringeren Abstand ist der Draht genauer positionierbar, um ungeordnete Wicklungen zu vermeiden. Durch das geordnete Ablegen des Drahts lassen sich geordnete Wicklungen erstellen, die einen höheren Nutfüllgrad aufweisen. Vorteilhafterweise erfolgt das Schrägstellen durch eine kombinierte Schwenkbewegung und Translation der Düse relativ zu dem Grundkörper, sodass die Düse nicht wie im Stand der Technik parallel zu einer radialen Richtung des Stators ausgerichtet ist, sondern vielmehr gewinkelt zu der radialen Richtung. Erfindungsgemäß weist die Wickelmaschine zumindest zwei stiftförmige Haltefinger auf, wobei die Haltefinger relativ zu dem Aufnahmeelement in drei unabhängigen Raumrichtungen bewegbar sind, wobei jeweils ein Haltefinger auf jeweils einer Stirnseite des Grundkörpers anordenbar ist, wobei der Draht durch jeden Haltefinger unabhängig von dem Nadelwickelkopf innerhalb der Nut positionierbar ist, um eine Ziellage des Drahts innerhalb der Nut festzulegen, und wobei die Haltefinger mechanisch gekoppelt sind, wodurch die Haltefinger fest miteinander verbunden und gegeneinander unbeweglich sind.

Ein entsprechendes Verfahren zum Herstellen einer Wicklung ist im Anspruch 5 beansprucht.

Die Unteransprüche haben bevorzugte Weiterbildungen der Erfindung zum Inhalt.

Die Düse ist bevorzugt parallel zu einer die Nut begrenzenden Seitenfläche des zu bewickelnden Zahns ausrichtbar. Dies erfolgt insbesondere durch eine kombinierte Translation und Rotation zwischen Düse und Aufnahmeelement. Durch eine parallele Ausrichtung ist ein Abstand zwischen der Seitenfläche des zu bewickelnden Zahns und der Düse minimiert. Somit kann der Draht mit minimalem Abstand zu der Seitenfläche des zu bewickelnden Zahns ausgegeben werden, was zu einer genauen Positionierung des Drahts führt. Damit lassen sich Wickelmuster genau fertigen, wodurch die Anzahl an Windungen innerhalb der Nut maximierbar ist.

Die Düse ist durch den Nadelträger relativ zu dem Aufnahmeelement zumindest teilweise um eine Bearbeitungsachse rotierbar. Die Bearbeitungsachse ist vorteilhafterweise parallel zu einer Mittelachse des Grundkörpers und ist somit bevorzugt parallel zu einer Rotorachse oder Statorachse. Weiterhin ist vorgesehen, dass die Düse entlang der Bearbeitungsachse und senkrecht zur Bearbeitungsachse in zumindest zwei, insbesondere in drei, unabhängigen Raumrichtungen linear verschiebbar ist, wobei durch die Düse der Draht senkrecht zu der Bearbeitungsachse ausgebbar ist. Vorteilhafterweise ist außerdem das Aufnahmeelement um eine Rotationsachse parallel zu der Bearbeitungsachse rotierbar. Die Rotationsachse ist insbesondere die zuvor beschriebene Mittelachse des Grundkörpers. Somit lässt sich der Draht innerhalb der Nut sehr genau platzieren, da die Düse durch derart ausgerichtet werden kann, dass ein Abstand zwischen Düse und Oberfläche des zu bewickelnden Zahns minimiert ist. Dies wird insbesondere durch eine Translation und Rotation des Nadelträgers bezüglich der Bearbeitungsachse, bevorzugt mit einer zusätzlichen Rotation des Aufnahmeelements, erreicht. Somit ist eine Platzierungsgenauigkeit des Drahts innerhalb der Nut optimiert. Durch die genauere Platzierbarkeit ist ermöglicht, Wickelmuster sehr genau einzuhalten, wodurch eine Wicklungsanzahl innerhalb der Nut maximiert werden kann.

Erfindungsgemäß weist die Wickelmaschine zwei Haltefinger auf. Durch die Haltefinger ist der Draht unabhängig von dem Nadelwickelkopf, sowie insbesondere unabhängig von der Düse, innerhalb der Nut positionierbar. Dadurch ist eine Ziellage des Drahts innerhalb der Nut festlegbar, wobei das Positionieren des Drahts in die Ziellage unabhängig von dem Nadelwickelkopf, insbesondere der Position der Düse, erfolgt. Die Haltefinger sind relativ zu dem Aufnahmeelement in drei unabhängigen Raumrichtungen bewegbar. Somit lassen sich die Haltefinger relativ zu dem Grundkörper beliebig positionieren. Dies ermöglicht, dass der Draht an einer beliebigen Stelle innerhalb der Nut platziert werden kann, ohne dass hierzu eine entsprechende Position der Düse des Nadelwickelkopfs notwendig ist. Dies bedeutet, dass die Düse lediglich parallel zu der Nut bewegt werden muss, eine Positionierung durch die Düse jedoch nicht notwendig ist und vielmehr durch die Haltefinger erfolgt. Durch die Bewegbarkeit in den drei Raumrichtungen ist diese Positionierung sehr genau ausführbar. Sind mehrere Haltefinger vorhanden, so ist ein Abstand dieser Haltefinger zueinander bevorzugt größer als ein Abstand zwischen den Stirnflächen des Grundkörpers, d.h. einer Erstreckung des Grundkörpers entlang der Mittelachse. Dadurch ist eine relative Bewegung der Haltestifte zueinander nicht notwendig. Somit erfolgt vorteilhafterweise die zuvor bereits beschriebene mechanische Fixierung der beiden Haltestifte relativ zueinander. Die Haltefinger sind besonders vorteilhaft axial außerhalb der Stirnflächen des Grundkörpers angeordnet und greifen nicht in die Nuten des Grundkörpers ein.

Bevorzugt muss der Nadelwickelkopf, insbesondere die Düse, nicht zwangsläufig in die Nut eingreifen, um den Draht in der Nut abzulegen. Vielmehr ermöglicht es die Wickelmaschine, dass der Nadelwicklungskopf, insbesondere die Düse, außerhalb, insbesondere vollständig außerhalb, der Nut verbleibt, wobei durch die Haltefinger dennoch ein Positionieren des Drahts innerhalb der Nut ermöglicht ist, um die Wicklung herzustellen. Die Düse ist somit durch den Nadelträger außerhalb der Nut führbar. Daher ist ermöglicht, den Nadelwickelkopf außerhalb der Nut zu führen. Somit lässt sich eine Wicklung realisieren, ohne dass die Düse in die Nut zwischen zwei Zähnen einzuführen ist. Dies ist insbesondere dann vorteilhaft, wenn ein Führen des Nadelwickelkopfs, insbesondere der Düse, teilweise in der Nut zu einer Kollision mit bereits gewickelten Windungen führen würde. Dadurch ist eine Anzahl von Windungen innerhalb der Nut vergrößerbar, wodurch der Nutfüllfaktor erhöht ist. Auf diese Weise können Wicklungen auf die Zähne aufgebracht werden, die im Vergleich zum Stand der Technik eine größere Anzahl von Windungen aufweisen. So würde im Stand der Technik ab einer bestimmten Windungszahl eine Kollision zwischen bereits gewickelten Windungen und Düse auftreten. Diese Kollision ist erfindungsgemäß dadurch verhindert, dass nicht die Düse vor die Positionierung des Drahts verwendet wird, sondern die der Haltefinger. Die Düse kann somit außerhalb der Nut verbleiben, wobei dennoch ermöglicht ist, den Draht innerhalb der Nut zu positionieren. Alternativ oder zusätzlich ist die Düse durch den Nadelträger innerhalb der Nut führbar, um den Draht zur Realisierung der Wicklung innerhalb der Nut zu positionieren. Diese Variante ist schneller und ermöglicht somit kürzere Wicklungszeiten, um die Wicklung herzustellen. Besonders vorteilhat sind die beiden Alternativen kombinierbar, indem zunächst ein Wickeln mit der Düse innerhalb der Nut erfolgt, anschließend, insbesondre wenn die Düse nicht mehr ohne Gefahr einer Kollision mit bereits gewickelten Windungen in der Nut geführt werden kann, ein Wickeln mit der Düse außerhalb der Nut durchgeführt wird.

Vorteilhafterweise weist die Wickelmaschine, erfindungsgemäß, zwei Haltefinger auf. Dabei ist jeweils ein Haltefinger auf jeweils einer Stirnseite des Grundkörpers anordenbar. Die Haltefinger sind, erfindungsgemäß, besonders vorteilhaft mechanisch gekoppelt. Insbesondere ist außerdem vorgesehen, dass die Haltefinger L-förmig ausgebildet sind, wobei sich ein Schenkel der L-Form parallel zu der Mittelachse des Grundkörpers und damit parallel zu einer Rotorachse oder Statorachse erstreckt. Die Stirnseiten des Grundkörpers sind dabei diejenigen Seiten, die senkrecht zu der Mittelachse orientiert sind. Besonders vorteilhaft verbleiben die Haltefinger jeweils außerhalb der Nuten des Grundkörpers und dienen zum Festlegen einer radialen Position des Drahts, d.h. zum Festlegen eines Abstands des Drahts relativ zu der Mittelachse. Die Düse des Nadelwickelkopfs kann daher mit einem anderen Abstand zur Mittelachse geführt werden, da durch den Haltefinger der gewünschte Abstand zur Mittelachse sichergestellt ist.

Die Erfindung betrifft weiterhin ein Verfahren zum Wickeln einer Wicklung auf einem Zahn eines Grundkörpers, wobei der Grundkörper insbesondere ein Rotorgrundkörper oder Statorgrundkörper ist. Insbesondere lassen sich nach dem Verfahren alle Zähne des Grundkörpers bewickeln. Zum Wickeln wird vorteilhafterweise eine Wickelmaschine wie zuvor beschrieben verwendet. Das Verfahren umfasst die folgenden Schritte: Zunächst erfolgt ein Platzieren eines Drahts an einer Startposition einer Nut an einer ersten Stirnseite des Grundkörpers an dem zu bewickelnden Zahn. Das Platzieren erfolgt mittels einer nadelförmigen Düse, die an einem Nadelträger eines Nadelwickelkopfs angebracht ist. Die Startposition ist an einer Nut angebracht, in der der Draht abgelegt werden soll. Die Düse wird an der Startposition näher an dem zu bewickelnden Zahn angeordnet, als an einem die Nut begrenzenden benachbarten Zahn. Insbesondere ist die Nut durch den zu bewickelnden Zahn und den benachbarten Zahn begrenzt. Da der benachbarte Zahn auf die Wicklung um den zu bewickelnden Zahn keinen Einfluss hat, erfolgt die Positionierung der Düse näher an dem zu bewickelnden Zahn. Dies ermöglicht ein genaueres Platzieren des Drahts, sodass Wickelmuster genau gewickelt werden können. Dies ermöglicht ein Maximieren der der Anzahl an Drähte innerhalb der Nut. Nach dem Platzieren an der Startposition erfolgt ein Bewegen des Nadelwickelkopfs parallel zu der Nut zu einer der ersten Stirnseite gegenüberliegenden zweiten Stirnseite. Gleichzeitig erfolgt ein Ablegen des Drahts innerhalb der Nut, wobei der Draht gemäß der Startposition innerhalb der Nut abgelegt wird. Während des Bewegens des Nadelwickelkopfs bleibt die Ausrichtung der Düse unverändert. Zuletzt erfolgt ein Platzieren des Drahts an einer Zielposition an der zweiten Stirnseite. Durch die Startposition und die Zielposition wird eine Ziellage des Drahts innerhalb der Nut festgelegt. Somit ist ermöglicht, dass der Draht genau an einer gewünschten Ziellage innerhalb des Grundkörpers, insbesondere innerhalb der Nut, platziert wird. Durch die beschriebene Ausrichtung der Düse lässt sich die Ziellage genau erreichen. Die Düse kann dazu innerhalb der Nut bewegt werden, oder außerhalb der Nut verbleiben.

Die Düse wird vorteilhafterweise parallel zu einer die Nut begrenzenden Seitenfläche des zu bewickelnden Zahns ausgerichtet. Dies erfolgt insbesondere durch eine kombinierte Translation und Rotation zwischen Düse und Aufnahmeelement. Durch eine parallele Ausrichtung ist ein Abstand zwischen der Seitenfläche des zu bewickelnden Zahns und der Düse minimiert. Somit kann der Draht mit minimalem Abstand zu der Seitenfläche des zu bewickelnden Zahns ausgegeben werden, was zu einer genauen Positionierung des Drahts führt. Damit lassen sich Wickelmuster genau fertigen, wodurch die Anzahl an Windungen innerhalb der Nut maximiert ist.

Um die Düse auszurichten ist vorgesehen, dass der Nadelträger relativ zu dem Aufnahmeelement zumindest teilweise um eine Bearbeitungsachse rotiert wird. Die Bearbeitungsachse ist vorteilhafterweise parallel zu einer Mittelachse des Grundkörpers und ist somit bevorzugt parallel zu einer Rotorachse oder Statorachse. Die Düse wird außerdem senkrecht zu der Bearbeitungsachse verschoben. Besonders vorteilhaft erfolgt außerdem ein rotieren des Grundkörpers um eine parallel zur Bearbeitungsachse ausgerichteten Rotationsachse, die insbesondere der Mittelachse des Grundkörpers entspricht. Somit ist die Düse insbesondere nicht radial zur Mittelachse des Grundkörpers ausgerichtet, sondern verläuft schräg zur radialen Richtung bezüglich der Mittelachse. Der Draht wird senkrecht zu der Bearbeitungsachse ausgegeben. Somit lässt sich der Draht innerhalb der Nut sehr genau platzieren, da die Düse durch eine kombinierte relative Rotationsbewegung und relative Translationsbewegung zwischen Nadelträger und Grundkörper derart ausgerichtet wird, dass ein Abstand zwischen Düse und Oberfläche des zu bewickelnden Zahns minimiert ist. Somit ist eine Platzierungsgenauigkeit des Drahts innerhalb der Nut optimiert. Durch die genauere Platzierung ist ermöglicht, Wickelmuster sehr genau einzuhalten, wodurch eine Wicklungsanzahl innerhalb der Nut maximiert werden kann.

In einer besonders bevorzugten Ausführungsform erfolgt das Platzieren an der Startposition an der ersten Stirnseite mittels eines stiftförmigen Haltefingers. Der Haltefinger ist insbesondere L-förmig ausgebildet. Dabei verbleibt der Nadelwickelkopf, insbesondere die Düse, außerhalb der Nut. Insbesondere kann die Düse axial außerhalb des Grundkörpers verbleiben, d.h. die Düse befindet sich auf Höhe des Haltefingers, der an der Stirnseite des Grundkörpers anordenbar ist. Zum Platzieren des Drahts an der Startposition wird der Draht vorteilhafterweise von dem Haltefinger aufgefädelt und an eine gewünschte radiale Position verschoben oder an der gewünschten radialen Position fixiert. Des Weiteren ist bevorzugt vorgesehen, dass der Nadelwickelkopf, insbesondere die Düse, außerhalb der Nut verbleibt, wenn der Nadelwickelkopf entlang der Nut von der ersten Stirnseite zu der zweiten Stirnseite bewegt wird, um den Draht in der Nut abzulegen. Somit wird der Draht in der Nut abgelegt, ohne dass der Nadelwickelkopf, insbesondere die Düse, in die Nut eingreifen muss. Schließlich erfolgt das Positionieren des Drahts an der Zielposition an der zweiten Stirnseite mittels eines weiteren stiftförmigen Haltefingers, der insbesondere identisch zu dem ersten Haltefinger ausgebildet ist. Besonders vorteilhaft sind, erfindungsgemäß, der erste Haltefinger und der zweite Haltefinger mechanisch gekoppelt und , fest miteinander verbunden und gegeneinander unbeweglich. Somit erfolgt ein genaues Platzieren des Drahts an der Zielposition, wobei der Nadelwickelkopf, insbesondere die Düse, außerhalb der Nut verbleibt. Vorteilhafterweise verbleibt die Düse axial außerhalb des Grundkörpers. Es ist somit ermöglicht, dass der Draht an der durch Startposition und Zielposition definierten Ziellage abgelegt wird, ohne dass der Nadelwickelkopf, insbesondere die Düse, durch die Nut bewegt werden muss. Vielmehr wird durch die Positionierung des Drahts mittels der Haltefinger erreicht, dass der Draht an einer Ziellage innerhalb der Nut abgelegt werden kann. Die beiden Haltefinger sind vorteilhafterweise jeweils axial außerhalb der Stirnflächen des Grundkörpers angeordnet und greifen ebenfalls nicht in die Nuten des Grundkörpers ein.

Vorteilhafterweise erfolgt nach dem Platzieren des Drahts an der Zielposition an der zweiten Stirnseite der Ablauf der folgenden Schritte: Zunächst wird der Nadelwickelkopf, insbesondere die Düse, zu einer benachbarten Nut bewegt. Der zu bewickelnde Zahn ist zwischen zwei Nuten angeordnet. Um den Zahn zu bewickeln, muss somit in zwei Nuten ein Ablegen des Drahts erfolgen, um eine umlaufende Windung um den Zahn zu erhalten. Daher ist vorgesehen, dass die Düse zu derjenigen benachbarten Nut bewegt wird, die dem zu bewickelnden Zahn zugeordnet ist. Anschließend erfolgt ein Platzieren des Drahts an einer Startposition an der zweiten Stirnseite des Grundkörpers. Das Platzieren des Drahts an der Startposition an der zweiten Stirnseite erfolgt mittels eines weiteren Haltefingers. Somit kann der Draht auch an der zweiten Stirnseite sehr genau platziert werden, wobei ein Eingreifen des Nadelwickelkopfs, insbesondere der Düse, in die benachbarte Nut nicht notwendig ist. Wiederum verbleibt der Nadelwickelkopf, insbesondere die Düse, außerhalb der benachbarten Nut. Anschließend erfolgt ein Bewegen des Nadelwickelkopfs parallel zu der benachbarten Nut zu der ersten Stirnseite, um den Draht innerhalb der benachbarten Nut abzulegen, wobei der Nadelwickelkopf, insbesondere die Düse, außerhalb der benachbarten Nut verbleibt. Zuletzt erfolgt ein Platzieren des Drahts an einer Zielposition an der ersten Stirnseite, wobei der Nadelwickelkopf, insbesondere die Düse, wiederum außerhalb der benachbarten Nut verbleibt. Das Platzieren des Drahts an der Zielposition an der ersten Stirnseite erfolgt mittels des Haltefingers und ist somit insbesondere unabhängig von der genauen Position der Düse. Durch die Startposition und die Zielposition eine Ziellage des Drahts innerhalb der benachbarten Nut definiert ist. Auf diese Weise ist insbesondere erreicht, dass eine Windung der Wicklung um den Zahn hergestellt wird. Nach einem Bewegen des Nadelwickelkopfs zurück zu der ursprünglichen Nut kann eine Wiederholung der zuvor genannten Schritte erfolgen, um weitere Windungen zu wickeln. Das Platzieren des Drahts an der Startposition an der zweiten Stirnseite kann insbesondere durch ein Abstützen des Drahts an bereits vorhandenen Windungen erfolgen.

Besonders vorteilhaft ist vorgesehen, dass eine Wicklung zweistufig hergestellt wird. Hierzu wird zunächst eine Unterwicklung auf einen Zahn des Grundkörpers aufgebracht. Anschließend wird auf die Unterwicklung eine Oberwicklung aufgebracht. Die Unterwicklung wird durch die folgenden Schritte aufgebracht: Zunächst erfolgt ein Platzieren des Drahts an einer Startposition einer Nut an einer ersten Stirnseite des Grundkörpers. Das Platzieren erfolgt mittels des Nadelwickelkopfes. Dazu wird insbesondere die Düse des Nadelwickelkopfes in die Nut eingeführt. Anschließend erfolgt ein Bewegen des Nadelwickelkopfs parallel zu der Nut zu einer der ersten Stirnseite gegenüberliegenden zweiten Stirnseite, um den Draht innerhalb der Nut abzulegen. Dabei greift der Nadelwickelkopf, insbesondere die Düse, zumindest teilweise in die Nut ein, um eine hochgenaue Positionierung des Drahts innerhalb der Nut zu erreichen. Anschließend erfolgt ein Bewegen des Nadelwickelkopfs zu einer benachbarten Nut, woraufhin ein Bewegen des Nadelwickelkopfs parallel zu der benachbarten Nut zurück zu der ersten Stirnseite erfolgt, um den Draht innerhalb der benachbarten Nut abzulegen. Wiederum erfolgt eine hochgenaue Positionierung des Drahts an einer Ziellage derart, dass Nadelwickelkopf, insbesondere die Düse, zumindest teilweise in die Nut eingreift. Schließlich erfolgt ein Platzieren des Drahts an einer nächsten Startposition der Nut an der ersten Stirnseite des Grundkörpers durch den Nadelwickelkopf, sodass der Nadelwickelkopf zurück zu der ursprünglichen Nut bewegt wird. Diese Schritte werden solange wiederholt, bis sämtliche Windungen der Unterwicklung generiert wurden. Da der Nadelwickelkopf zumindest teilweise in die Nut eingreift, wobei insbesondere vorgesehen ist, dass die Düse des Nadelwickelkopfs in die Nut eingreift, kann eine Positionierung einfach und aufwandsarm durch den Nadelwickelkopf erreicht werden. Die zusätzliche Positionierung durch einen Haltefinger ist nicht notwendig. Somit lässt sich die Unterwicklung sehr rasch erstellen. Anschließend erfolgt ein Wickeln der Oberwicklung gemäß den Schritten wie zuvor beschrieben. Insbesondere wird hierzu der Haltefinger zur Positionierung des Drahts verwendet. Somit ist ein Eingreifen des Nadelwickelkopfs, insbesondere der Düse, in die Nut nicht mehr erforderlich. Somit lassen sich weitere Windungen auf die Unterwicklung aufbringen, was im Stand der Technik nicht möglich wäre. Dadurch ist der Nutfüllfaktor vergrößerbar.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine schematische Übersicht der Wickelmaschine gemäß einem Ausführungsbeispiel der Erfindung,
- Figur 2: eine schematische Detailansicht der Wickelmaschine gemäß dem Ausführungsbeispiel der Erfindung während des Wickelns einer Wicklung,
- Figur 3: eine schematische Detailansicht des Nadelwickelkopfs der Wickelmaschine gemäß dem Ausführungsbeispiel der Erfindung,
- Figur 4: eine schematische Detailansicht der Haltefinger der Wickelmaschine gemäß dem Ausführungsbeispiel der Erfindung, und
- Figur 5: eine schematische Schnittansicht durch die Wickelmaschine gemäß dem Ausführungsbeispiel der Erfindung.

### Ausführungsformen der Erfindung

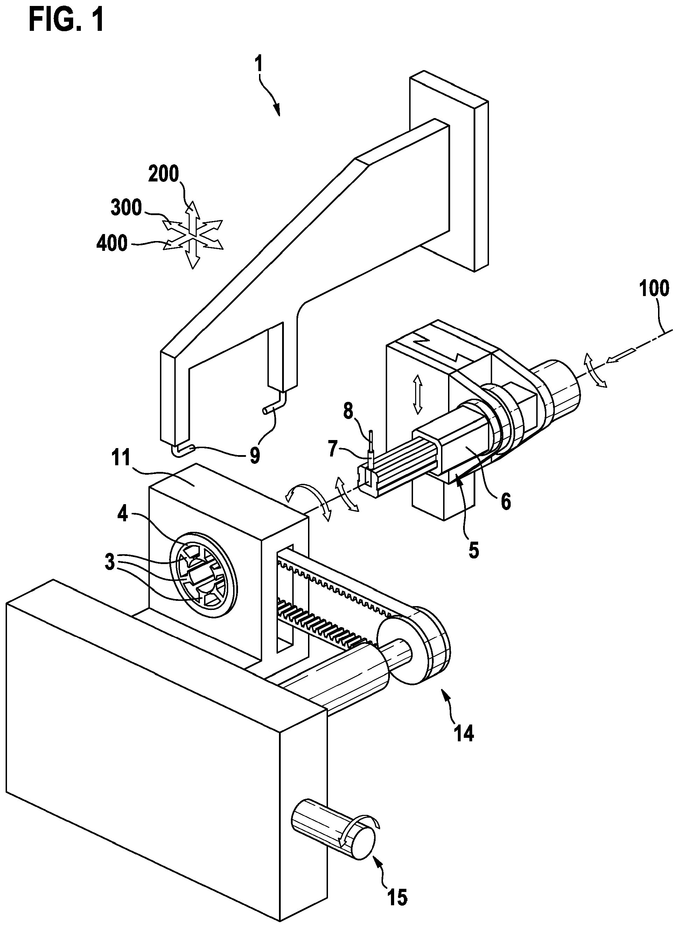

Figur 1 zeigt schematisch eine Wickelmaschine 1 gemäß einem Ausführungsbeispiel der Erfindung. Die Wickelmaschine 1 umfasst ein Aufnahmeelement 11. In das Aufnahmeelement 11 ist ein Grundkörper 4 eines Stators oder eines Rotors einsetzbar. Die Wickelmaschine 1 ist ausgebildet, Zähne 3 des in das Aufnahmeelement 11 eingesetzten Grundkörpers 4 mit einem Draht 8 zu bewickeln. Hierzu ist ein Nadelwickelkopf 5 vorhanden. Der Nadelwickelkopf 5 umfasst einen Nadelträger 6 und eine Düse 7. Die Düse 7 ist nadelförmig ausgebildet und an dem Nadelträger 6 angebracht. Durch den Nadelträger 6 ist die Düse 7 bewegbar. Insbesondere ist eine Bearbeitungsachse 100 definiert, entlang derer der Nadelwickelkopf 5 bewegbar ist, so dass der Nadelträger 6 die Düse 7 entlang der Bearbeitungsachse 100 linear verschieben kann. Die Düse 7 erstreckt sich senkrecht zu der Bearbeitungsachse 100, so dass der Draht 8 senkrecht zu der Bearbeitungsachse 100 ausgebbar ist. Des Weiteren ist vorgesehen, dass die Düse 7 um die Bearbeitungsachse 100 rotierbar ist.

Die Bearbeitungsachse 100 ist insbesondere parallel zu der Mittelachse (nicht gezeigt) des Grundkörpers 4 ausgerichtet. Um eine optimale Platzierbarkeit des Drahts 8 an dem Grundkörper 4 zu erreichen, ist außerdem vorgesehen, dass in zumindest einer Raumrichtung ein Verschieben des Nadelwickelkopfs 5 senkrecht zu der Bearbeitungsachse 100 ermöglicht ist.

Des Weiteren weist das Aufnahmeelement 11 einen Rotationsantrieb 14 und einen Schwenkantrieb 15 auf. Durch den Rotationsantrieb 14 ist ermöglicht, den Grundkörper 4 um seine Mittelachse zu rotieren. Durch den Schwenkantrieb 15 ist ermöglicht, den Grundkörper 4 senkrecht zu seiner Mittelachse und damit senkrecht zu der Bearbeitungsachse 100 zu verschwenken. Auf diese Weise lassen sich benötigte relative Ausrichtungen von Düse 7 und Grundkörper 4 erreichen.

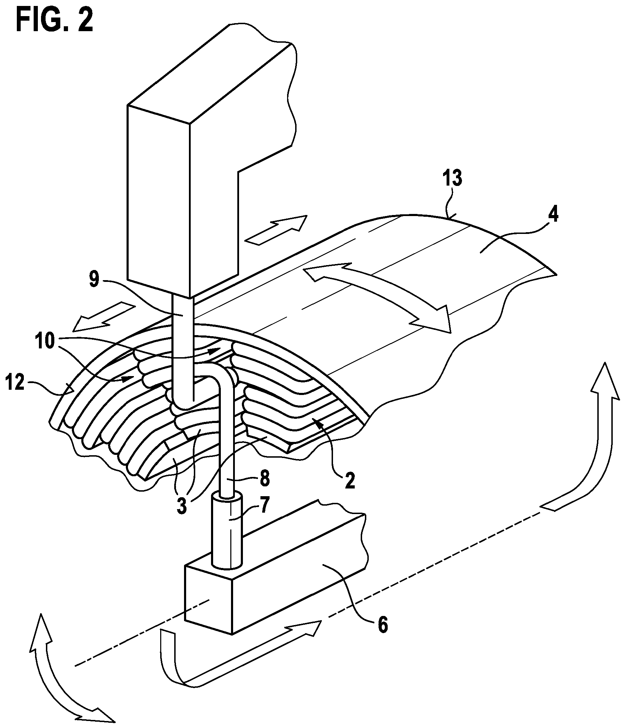

Um eine Wicklung auf einen Zahn 3 aufzubringen, ist die Düse 7 durch den Nadelträger 6 in eine Nut 10 (vgl. Figur 2) zwischen zwei Zähnen 3 einführbar. Auf diese Weise kann mittels herkömmlicher Nadelwickeltechnik eine Wicklung 2 auf die Zähne 3 des Grundkörpers 4 aufgewickelt werden.

Ist eine gewissen Anzahl von Windungen auf einen Zahn 3 aufgewickelt, so kann die Düse 7 nicht mehr in der im Zahn 3 benachbarten Nut 10 eingeführt werden, ohne mit den bereits gewickelten Windungen zu kollidieren. Dies würde zu einer Beschädigung des bereits gewickelten Drahts 8 führen, weswegen der Wickelvorgang zu beenden ist, wenngleich in der Nut 10 ausreichend Platz für weitere Windungen vorhanden wäre.

Um weitere Windungen auf den Zahn 3 aufzubringen, ist ein Paar von Haltefingern 9 vorhanden. Die Haltefinger 9 sind L-förmig ausgebildet, wobei sich ein Schenkel der L-Form parallel zu der Bearbeitungsachse 100 erstreckt. Die Haltefinger 9 sind in drei Raumrichtungen 200, 300, 400 unabhängig voneinander bewegbar. Somit lässt sich jeder Haltefinger 9 beliebig relativ zu dem Grundkörper 4 platzieren.

Figur 2 zeigt schematisch den Einsatz des Haltefingers 9 an einer ersten Stirnseite 12 des Grundkörpers 4. So ist erfindungsgemäß vorgesehen, dass die beiden Haltefinger 9 mechanisch gekoppelt sind und einen festgelegten Abstand zueinander aufweisen. Dieser Abstand ist größer als eine Länge des Grundkörpers entlang seiner Mittelachse und damit größer als ein Abstand von einer ersten Stirnfläche 12 und einer gegenüberliegenden zweiten Stirnfläche 13 des Grundkörpers. Somit lassen sich die Haltefinger 9 außerhalb des Grundkörpers 4 jeweils an der ersten Stirnseite 12 und der zweiten Stirnseite 13 platzieren.

Sollen weitere Windungen auf eine bereits vorhandene Wicklung eines Zahns 3 aufgebracht werden, so kann die Düse 7 nicht in die Nut 10 zwischen zwei Zähnen 3 eingreifen, da dies, wie zuvor beschrieben, zu einer Kollision mit bereits gewickelten Drähten 8 führen würde. Daher verbleibt die Düse 7 außerhalb der Nut 10, wobei gleichzeitig eine Platzierung des Drahts 8 durch den Haltefinger 9 vorgenommen wird. Insbesondere bedeutet dies, dass eine bezüglich der Mittelachse des Grundkörpers 4 radiale Position des Drahts 8 durch den Haltefinger 9 festgelegt wird. Die Düse 7 kann dadurch an einer anderen radialen Position, insbesondere außerhalb der Nut 10, bewegt werden, wobei gleichzeitig der Draht 8 an der gewünschten radialen Position, insbesondere innerhalb der Nut 10, abgelegt wird. Ist die Düse 7 bis an die zweite Stirnseite 13 bewegt, so kann die Düse 7 axial (bezüglich der Mittelachse des Grundkörpers 4) außerhalb des Grundkörpers 4 an eine Zielposition bewegt werden, um den Draht 8 an eine gewünschte Ziellage innerhalb der Nut 10 zu bewegen. Anschließend kann der Draht 8 zur Verlegung in einer benachbarten Nut 10 durch den Haltefinger 9 an der zweiten Stirnseite 13 entsprechend platziert werden, so dass die Düse 7 zurück zu der ersten Stirnseite 12 bewegt werden kann, wobei wiederum die Düse 7 außerhalb der Nut 10 verbleibt, der Draht 8 jedoch aufgrund des Haltefingers 9 innerhalb der Nut 10 abgelegt wird. Somit lassen sich zusätzliche Windungen auf jeden Zahn 3 aufwickeln, wodurch ein Nutfüllfaktor erhöht ist. Der Nutfüllfaktor stellt das Verhältnis einer Querschnittsfläche der Nut 10 zu der gesamten Querschnittsfläche der vorhandenen Wicklung innerhalb der Nut 10 dar.

Besonders bevorzugt umfasst das Ablegen des Drahts 8 in der Nut 10 somit drei Schritte: Zunächst wird die Düse 7 außerhalb des Grundkörpers 4 an eine gewünschte radiale Position überführt. Diese gewünschte radiale Position entspricht derjenigen radialen Position, an der der Draht 8 innerhalb der Nut 10 abgelegt werden soll. Da sich die Düse 7 außerhalb des Grundkörpers 4 befindet, das bedeutet axial außerhalb des Grundkörpers 4, ist keine Gefahr einer Kollision mit vorhandenen Wicklungen 2 gegeben. Anschließend erfolgt ein Halten des Drahts 8 an der gewünschten radialen Position mittels des Haltefingers 9. Alternativ oder zusätzlich kann ein Positionieren des Drahts 8 an der radialen Position auch durch den Haltefinger 9 selbst erfolgen. Anschließend wird die Düse zunächst radial Richtung Mittelachse des Grundkörpers 4 bewegt, um die Düse parallel zu der Bearbeitungsachse 100 und damit parallel zu der Mittelachse des Grundkörpers 4 zu bewegen. Sind die Zähne 3 schräg an den Grundkörper 4 angebracht, so erfolgt gleichzeitig ein Rotieren des Grundkörpers 4 mittels des Rotationsantriebs 14. Da die Düse 7 zuvor radial bewegt wurde, befindet sich die Düse 7 während des gesamten Verschiebens parallel zu der Mittelachse außerhalb der Nut 10. Sobald die Düse 7 entlang der gesamten Nut 10 bewegt wurde und wiederum axial außerhalb des Grundkörpers 4 angeordnet ist, erfolgt ein erneutes radiales Bewegen, um eine radiale Zielposition des Drahts 8 auch an der zweiten Stirnseite 13 zu erreichen. Da sich die Düse 7 außerhalb des Grundkörpers befindet, ist eine Kollision mit vorhandenen Wicklungen 2 wiederum ausgeschlossen. Der Draht 8 wurde somit an einer gewünschten Position innerhalb der Nut 10 platziert, ohne dass die Düse 7 selbst innerhalb der Nut 10 angeordnet werden muss.

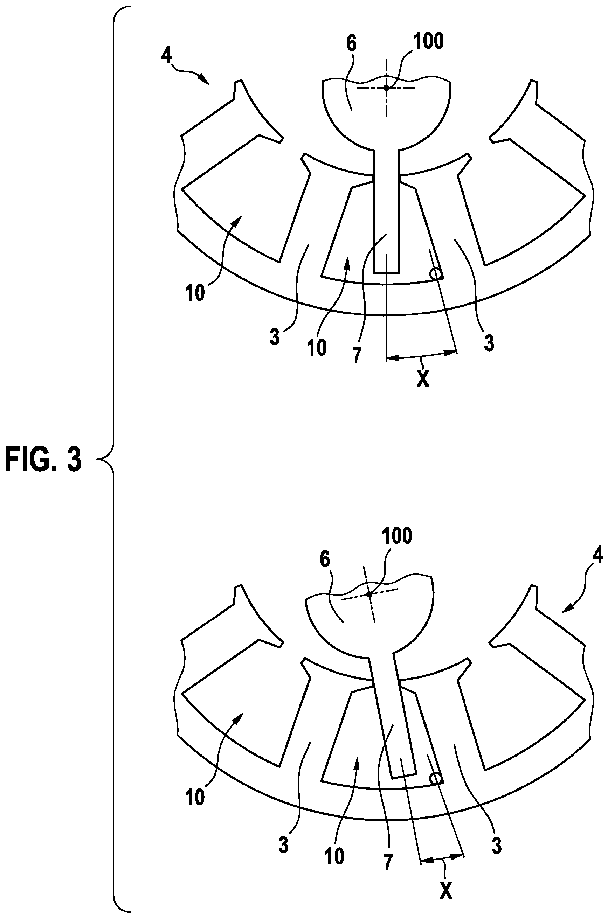

Vorteilhafterweise wird die Wicklung 2 zweiteilig gewickelt. Hierzu erfolgt zunächst das Wickeln einer Unterwicklung und anschließend das Wickeln einer Oberwicklung auf die Unterwicklung. Zum Wickeln der Unterwicklung wird der Haltefinger 9 nicht benötigt. Vielmehr ist zum Wickeln der Unterwicklung vorgesehen, dass die Düse 7 in die Nut 10 eingreift und somit den Draht 8 innerhalb der Nut 10 platziert. Um ein optimales Platzieren des Drahts 8 innerhalb der Nut 10 zu erreichen, ist die Düse 7, wie bereits beschrieben, um die Bearbeitungsachse 100 rotierbar. Der Vorteil dieser Bewegung ist in Figur 3 gezeigt. Der Haltefinger 9 kann insbesondere auch vertikal bewegbar sein, was in den Figuren der Raumrichtung 200 entspricht, um den Draht 8 in die erforderliche Position zu ziehen.

Figur 3 zeigt schematisch auf der oberen Seite eine Abbildung, bei der der Nadelträger 6 die Düse 7 nicht schräg in die Nut 10 eingreift und somit ein Abstand der Düse 7 zu den beiden die Nut begrenzenden Zähnen 3 gleich groß ist. Auf der unteren Seite ist schematisch der Fall dargestellt, dass der Nadelträger 6 die Düse 7 durch eine Rotationsbewegung und Translationsbewegung bezüglich der Bearbeitungsachse 100 schräg zur Nut 10 ausgerichtet hat. Durch diese Rotation und Translation ist ermöglicht, die Düse 7 schräg in die Nut 10 einzuführen und insbesondere parallel zu dem zu bewickelnden Zahn 3 auszurichten. Dies führt zu einer Verringerung des Abstands X zwischen Austrittspunkt des Drahts 8 aus der Düse 7 und Oberfläche des zu bewickelnden Zahns 3. Durch diesen verringerten Abstand X kann der Draht 8 hochgenau innerhalb der Nut positioniert werden. Somit lässt sich die Unterwicklung nach einem sehr genauen Muster fertigen. Die in der unteren Darstellung der Figur 3 gezeigte Position lässt sich insbesondere dadurch erreichen, dass die Düse 7 um die Bearbeitungsachse 100 rotiert wird, während zusätzlich eine Translation erfolgt, bei der die Bearbeitungsachse 100 bezüglich der Mittelachse des Grundkörpers 4 radial verschoben wird. Des Weiteren wird der Grundkörper 4 um dessen Mittelachse rotiert. Durch eine Überlagerung dieser Bewegungen ist eine Ausrichtung wie in Figur 3 unten gezeigt ermöglicht. Alternativ kann der Nadelträger 6 die Düse 7 auch in zwei unabhängige Richtungen senkrecht zur Bearbeitungsachse 100 verschieben und um die Bearbeitungsachse 100 rotieren, um die Düse 7 wie in Figur 3 unten gezeigt auszurichten. In diesem Fall wird keine Rotation des Grundkörpers benötigt.

Durch die Wickelmaschine 1 ist somit eine Wicklung 2 an dem Grundkörper 4 sehr genau anbringbar. Insbesondere lassen sich eine Vielzahl von Windungen auf die Zähne 3 des Grundkörpers 4 wickeln, wobei insbesondere bei Vollblechschnitten eine höhere Windungszahl als Stand der Technik erreicht werden kann.

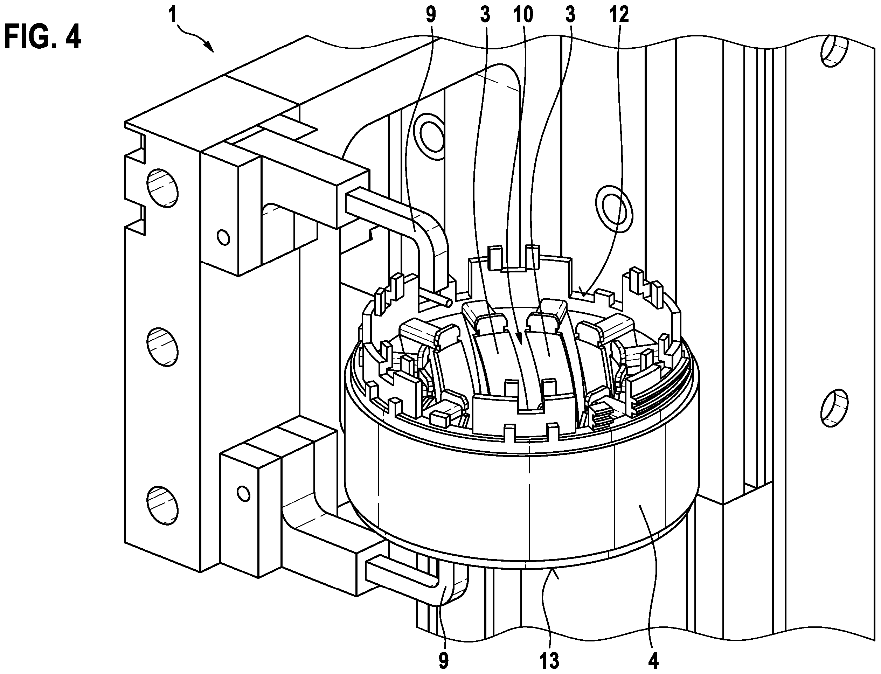

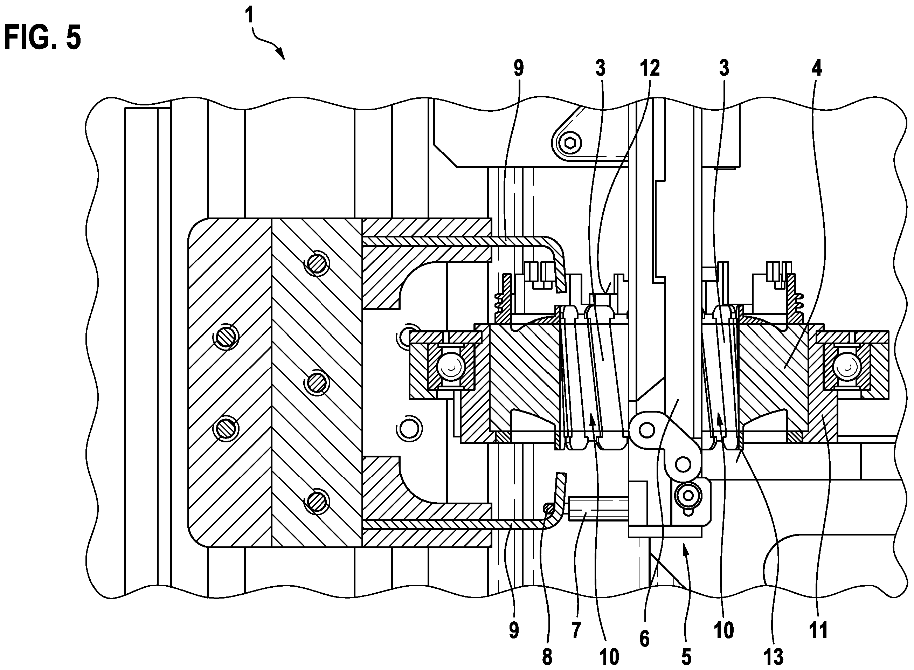

Die Figur 4 zeigt eine schematische Teilansicht der Haltefinger 9. Figur 5 zeigt eine schematische Schnittansicht durch einen Teil der Wickelmaschine 1. Insbesondere ist in Figur 5 ersichtlich, dass die Zähne 3 des Grundkörpers 4 abgeschrägt sind und somit nicht parallel zu der Mittelachse des Grundkörpers 4 verlaufen. Daher ist während des Wickelvorgangs eine Rotation des Grundkörpers 4 mittels des Rotationsantriebs 14 notwendig, um die Düse 7 parallel zu einer Nut 10 zwischen den Zähnen 3 zu führen.

Mit der Wickelmaschine 1 gemäß dem Ausführungsbeispiel der Erfindung lässt sich die Wicklung 2 somit fertigen. Im Folgenden wird ein Verfahren gemäß einem Ausführungsbeispiel der Erfindung beschrieben, mit dem die Wicklung 2 auf die Zähne 3 des Grundkörpers 4 aufwickelbar ist:
Zunächst erfolgt das Wickeln der Unterwicklung. Hierzu wird der Draht 8 an einer Startposition an der ersten Stirnseite 12 des Grundkörpers 4 platziert. Dies erfolgt insbesondere dadurch, dass sich die Düse 7 an der ersten Stirnseite 12 des Grundkörpers 4 außerhalb einer Nut 10 befindet. Die Startposition entspricht insbesondere einer bezüglich der Mittelachse des Grundkörpers 4 festgelegten radialen Position. Dem zu bewickelnden Zahn 3 sind zwei benachbarte Nuten 3 zugeordnet. Somit wird die Düse 7 durch eine der Nuten 10 bewegt, um den Draht innerhalb der Nut 10 in einer Ziellage abzulegen. Durch die rotierbare Düse 7 lässt sich die Düse dabei parallel zu der Oberfläche des zu bewickelnden Zahns 3 ausrichten. Die Düse 7 wird anschließend an der zweiten Stirnseite 13 des Grundkörpers 4 zu einer benachbarten Nut 10 bewegt, die ebenfalls dem zu bewickelnden Zahn 3 zugeordnet ist. Anschließend erfolgt ein Bewegen der Düse 7 in der benachbarten Nut 10, um den Draht 8 innerhalb der benachbarten Nut 10 an einer Ziellage abzulegen. Die Düse 7 befindet sich dann wieder an der ersten Stirnseite 12. Daher erfolgt ein Bewegen der Düse 7 zurück zu der ursprünglichen Nut 10 und ein Platzieren des Drahts 8 an einer nächsten Startposition an der ersten Stirnseite 12. Anschließend werden diese Schritte solange durchgeführt, bis sämtliche Windungen der Unterwicklung auf den Zahn 3 aufgebracht sind.

Nach dem Wickeln der Unterwicklung erfolgt das Wickeln der Oberwicklung. Zum Wickeln der Oberwicklung kann die Düse 7 nicht mehr in die Nut 10 eingreifen, da dies zu einer Kollision mit den bereits gewickelten Windungen der Unterwicklung führen würde. Daher wird die Düse 7 axial außerhalb des Grundkörpers 4 an eine Startposition bewegt. Zusammen mit dem Haltefinger 9 an der ersten Stirnseite 12 des Grundkörpers erfolgt ein Platzieren des Drahts an einer gewünschten Startposition. Insbesondere ist besagte Startposition eine radiale Position relativ zu der Mittelachse des Grundkörpers 4. Die Düse 7 wird anschließend parallel zu der Nut 10 bewegt, wobei die Düse 7 außerhalb der Nut 10 verbleibt. Da der Draht 8 durch den Haltefinger 9 in der Startposition gehalten wurde, wird der Draht 8 hingegen innerhalb der Nut 10 abgelegt. Sobald die Düse 7 die zweite Stirnseite 13 des Grundkörpers 4 erreicht hat, erfolgt ein radiales Bewegen der Düse 7 zu einer Zielposition. Da sich die Düse 7 axial außerhalb des Grundkörpers 4 befindet, ist wiederum keine Gefahr der Kollision mit den Windungen der Unterwicklung gegeben. Durch das radiale Bewegen wird der Draht 8 an einer Zielposition an der zweiten Stirnseite 13 entsprechend platziert. Dies führt dazu, dass der gesamte Draht 8 eine Ziellage innerhalb der Nut 10 erreicht.

Anschließend erfolgt ein Bewegen der Düse 7 zu der benachbarten Nut 10. Hier erfolgt wiederum ein Platzieren des Drahts 8 an der Startposition unter Zuhilfenahme des Haltefingers 9, wobei die Düse 7 wiederum außerhalb des Grundkörpers 4 verbleibt und somit auch in die benachbarte Nut 10 nicht eingreift. Das Ablegen des Drahts 8 innerhalb der benachbarten Nut erfolgt auf dieselbe Art und Weise wie zuvor für die Nut 10 beschrieben. Somit erfolgt das Wickeln der Oberwicklung unter Zuhilfenahme der Haltefinger 9 der Wickelmaschine 1, so dass die Oberwicklung sicher und zuverlässig angebracht werden kann. Durch die Oberwicklung ist der Nutfüllfaktor der Wicklung im Vergleich zum Stand der Technik vergrößert.

## Patentansprüche

1. Wickelmaschine (1) umfassend
• ein Aufnahmeelement (11) zum Aufnehmen eines Grundkörpers (4) umfassend Zähne (3), auf die eine Wicklung (2) aufzuwickeln ist,
• einen Nadelwickelkopf (5), durch den ein Draht (8) parallel zu einer Oberfläche jedes Zahns (3) durch den Grundkörper (4) führbar ist, um den Draht (8) innerhalb einer Nut (10) zwischen zwei Zähnen (3) des Grundkörpers (4) abzulegen, sodass ein zu bewickelnder Zahn (3) mit dem Draht (8) umwickelbar ist,
• wobei der Nadelwickelkopf (5) einen Nadelträger (6) aufweist, an dem eine nadelförmige Düse (7) angebracht ist, über die ein zu wickelnder Draht (8) ausgebbar ist,
• wobei die Düse (7) schräg in der Nut (10) anordenbar ist, sodass ein Abstand der Düse (7) zu dem zu bewickelnden Zahn (3) kleiner ist als zu einem die Nut (10) begrenzenden benachbarten Zahn (3),
• **gekennzeichnet durch** zumindest zwei stiftförmige Haltefinger (9),
• wobei die Haltefinger (9) relativ zu dem Aufnahmeelement (11) in drei unabhängigen Raumrichtungen (200, 300, 400) bewegbar sind,
• wobei jeweils ein Haltefinger (9) auf jeweils einer Stirnseite (12, 13) des Grundkörpers (4) anordenbar ist,
• wobei der Draht (8) durch jeden Haltefinger (9) unabhängig von dem Nadelwickelkopf (5) innerhalb der Nut (10) positionierbar ist, um eine Ziellage des Drahts (8) innerhalb der Nut (10) festzulegen, und
• wobei die Haltefinger (9) mechanisch gekoppelt sind, wodurch die Haltefinger (9) fest miteinander verbunden und gegeneinander unbeweglich sind.

2. Wickelmaschine (1) nach Anspruch 1, **dadurch gekennzeichnet, dass** die Düse (8) parallel zu einer die Nut (10) begrenzenden Seitenfläche des zu bewickelnden Zahns (3) ausrichtbar ist.

3. Wickelmaschine (1) nach einem der vorhergehenden Ansprüche, **dadurch gekennzeichnet, dass** die Düse (7) durch den Nadelträger (6) relativ zu dem Aufnahmeelement (11) um eine Bearbeitungsachse (100) rotierbar und entlang sowie senkrecht zu der Bearbeitungsachse (100) in drei unabhängigen Raumrichtungen linear verschiebbar ist, wobei durch die Düse (7) der Draht (8) senkrecht zu der Bearbeitungsachse (100) ausgebbar ist, und wobei das Aufnahmeelement (11) insbesondere um eine zu der Bearbeitungsachse (100) parallelen Rotationsachse rotierbar ist.

4. Wickelmaschine (1) nach einem der vorhergehenden Ansprüche, **dadurch gekennzeichnet, dass** die Düse (7) durch den Nadelträger (6) außerhalb der Nut (10) führbar und der Haltefinger (9) zur Positionierung des Drahtes (8) innerhalb der Nut (10) zur Realisierung der Wicklung (2) ausgebildet ist und/oder dass die Düse (7) durch den Nadelträger (6) innerhalb der Nut (10) führbar ist, um den Draht (8) zur Realisierung der Wicklung (2) zu positionieren.

5. Verfahren zum Herstellen einer Wicklung (2) auf Zähnen (3) eines Grundkörpers (4) umfassend die Schritte:
• Platzieren eines Drahts (8) an einer Startposition an einer ersten Stirnseite (12) des Grundkörpers (4) an einem zu bewickelnden Zahn (3) mittels einer nadelförmigen Düse (7), die an einem Nadelträger (6) eines Nadelwickelkopfs (5) angebracht ist, wobei die Startposition an einer Nut (10) angeordnet ist, in der der Draht (8) abgelegt werden soll, und wobei die Düse (7) näher an dem zu bewickelnden Zahn (3) angeordnet ist, als an einem die Nut (10) begrenzenden benachbarten Zahn (3),
• Bewegen des Nadelwickelkopfs (5) entlang der Nut (10), um den Draht (8) innerhalb der Nut (10) abzulegen, wobei die Ausrichtung der Düse (7) unverändert bleibt, und
• Platzieren des Drahts (8) an einer Zielposition an einer der ersten Stirnseite (12) gegenüberliegenden zweiten Stirnseite (13), wobei durch die Startposition und Zielposition eine Ziellage des Drahts (8) innerhalb der Nut (10) definiert ist,
**dadurch gekennzeichnet dass**:
• der Draht (8) an der Startposition an der ersten Stirnseite (12) des Grundkörpers (4) mittels eines stiftförmigen Haltefingers (9) platziert wird, wobei der Nadelwickelkopf (5) außerhalb der Nut (10) verbleibt,
• der Nadelwickelkopf (5) außerhalb der Nut (10) verbleibt, wenn dieser entlang der Nut (10) bewegt wird, um den Draht (8) innerhalb der Nut (10) abzulegen, und
• der Draht (8) an der Zielposition an der zweiten Stirnseite (13) mittels eines weiteren stiftförmigen Haltefingers (9) platziert wird, wobei der Nadelwickelkopf (5) außerhalb der Nut (10) verbleibt, wobei die Haltefinger (9) mechanisch gekoppelt sind, wodurch die Haltefinger (9) fest miteinander verbunden und gegeneinander unbeweglich sind.

6. Verfahren nach Anspruch 5, **dadurch gekennzeichnet, dass** die Düse (8) zum Platzieren des Drahts (8) an der Startposition und/oder zum Bewegen des Nadelwickelkopfs (5) parallel zu einer die Nut (10) begrenzenden Seitenfläche des zu bewickelnden Zahns (3) ausgerichtet wird.

7. Verfahren nach Anspruch 5 oder 6, **dadurch gekennzeichnet, dass** die Düse (7) durch den Nadelträger (6) relativ zu dem Grundkörper (4) um eine Bearbeitungsachse (100) rotiert und senkrecht zu der Bearbeitungsachse (100) linear verschoben wird, und wobei insbesondere der Grundkörper (4) um eine zu der Bearbeitungsachse (100) parallelen Rotationsachse rotiert wird, um die Düse (7) näher an der Seitenfläche des zu bewickelnden Zahns (3) anzuordnen, als an dem der Seitenfläche gegenüberliegenden benachbarter Zahn (3).

8. Verfahren nach einem der Ansprüche 5 bis 7, **dadurch gekennzeichnet, dass** nach dem Platzieren des Drahts (8) an der Zielposition an der zweiten Stirnseite (13) die folgenden Schritte ausgeführt werden:
• Bewegen des Nadelwickelkopfs (5) zu einer benachbarten Nut (10),
• Platzieren des Drahts (8) an einer Startposition an der zweiten Stirnseite (13) des Grundkörpers (4) mittels des weiteren Haltefingers (9), wobei der Nadelwickelkopf (5), insbesondere die Düse (7), außerhalb der benachbarten Nut (10) verbleibt,
• Bewegen des Nadelwickelkopfs (5) parallel zu der benachbarten Nut (10), wobei der Nadelwickelkopf (5), insbesondere die Düse (7), außerhalb der benachbarten Nut (10) verbleibt, um den Draht (8) innerhalb der benachbarten Nut (10) abzulegen und
• Platzieren des Drahts (8) an einer Zielposition an der ersten Stirnseite (12) mittels des Haltefingers (9), wobei der Nadelwickelkopf (5), insbesondere die Düse (7), außerhalb der benachbarten Nut (10) verbleibt und wobei durch die Startposition und Zielposition eine Ziellage des Drahts (8) innerhalb der benachbarten Nut (10) definiert ist.

9. Verfahren zum Herstellen einer Wicklung (2) auf Zähnen (3) eines Grundkörpers (4) mittels einer Wickelmaschine (1) nach einem der Ansprüche 1 bis 4, wobei zunächst zumindest eine Unterwicklung auf einen Zahn (3) des Grundkörpers (4) und anschließend auf die Unterwicklung eine Oberwicklung aufgebracht wird, umfassend die Schritte:
• Platzieren des Drahts (8) an einer Startposition einer Nut (10) auf einer ersten Stirnseite (12) des Grundkörpers (4) mittels des Nadelwickelkopfs (5),
• Bewegen des Nadelwickelkopfs (5) parallel zu der Nut (10) zu einer der ersten Stirnseite (12) gegenüberliegenden zweiten Stirnseite (13) des Grundkörpers (4), um den Draht (8) innerhalb der Nut (10) an einer Ziellage abzulegen, wobei der Nadelwickelkopf (5), insbesondere die Düse (7), zumindest teilweise in die Nut (10) eingreift,
• Bewegen des Nadelwickelkopfs (5) an der zweiten Stirnseite (13) zu einer benachbarten Nut (10) und Bewegen des Nadelwickelkopfs (5) parallel zu der benachbarten Nut (10) zurück zu der ersten Stirnseite (12), um den Draht (8) innerhalb der benachbarten Nut (10) an einer Ziellage abzulegen, wobei der Nadelwickelkopf (5), insbesondere die Düse (7), zumindest teilweise in die Nut (10) eingreift,
• Platzieren des Drahts (8) an einer nächsten Startposition der Nut (10) an der ersten Stirnseite (12) des Grundkörpers (4) mittels des Nadelwickelkopfs (5),
• Wiederholen der genannten Schritte des Verfahrens und Platzierens bis alle Windungen der Unterwicklung erzeugt wurden,
• Wickeln der Oberwicklung gemäß dem Verfahren nach einem der Ansprüche 5 bis 8.

## Claims

1. Winding machine (1) comprising
• a receiving element (11) for receiving a base body (4) comprising teeth (3) onto which the winding (2) is to be wound,
• a nail winding head (5) through which a wire (8) can be guided in parallel to a surface of each tooth (3) through the base body (4) in order to place the wire (8) inside a groove (10) between two teeth (3) of the base body (4), so that a wire (8) can be wound around a tooth (3) to be wound,
• wherein the nail winding head (5) has a nail support (6) at which a needle-shaped nozzle (7) is attached, via which a wire (8) to be wound can be output,
• wherein the nozzle (7) can be arranged transversally inside the groove (10), so that a distance of the nozzle (7) to the tooth to be wound (3) is smaller than to an adjacent tooth (3) that delimits the groove (10),
• **characterized by** at least two pin-shaped retaining fingers (9),
• wherein the retaining fingers (9) can be moved relative to the receiving element (11) in three independent spatial directions (200, 300, 400),
• respectively one retaining finger (9) can be arranged on respectively one front side (12, 13) of the base body (4),
• wherein the wire (8) can be positioned inside the groove (10) independently of the nail winding head (5) by the retaining finger (9) to determine a target location of the wire (8) inside the groove (10), and
• wherein the retaining fingers (9) are mechanically coupled such that the retaining fingers (9) are fixedly attached to each other and not movable with respect to each other.

2. Winding machine (1) according to claim 1, **characterized in that** the nozzle (8) can be aligned in parallel to a side surface of the tooth to be wound (3) that delimits the groove (10).

3. Winding machine (1) according to any of the preceding claims, **characterized in that** the nozzle (7) can be rotated relative to the receiving element (11) about a processing axis (100) by means of the nail support (6), and can be linearly displaced along the as well as perpendicular to the processing axis (100) in three independent spatial directions, wherein the wire (8) can be output perpendicular to the processing axis (100) through the nozzle (7), and wherein the receiving element (11) is in particular rotatable about a rotational axis that is parallel to the processing axis (100).

4. Winding machine (1) according to any of the preceding claims, **characterized in that** the nozzle (7) can be guided through the nail support (6) outside of the groove (10), and the retaining finger (9) is formed for positioning the wire (8) inside the groove (10) in order to realize the winding (2) and/or **in that** the nozzle (7) can be guided through the nail support (6) inside the groove (10) to position the wire (8) in order to realize the winding (2).

5. Method for manufacturing a winding (2) on the teeth (3) of a base body (4), comprising the steps of:
• placing a wire (8) at a start position at a first front side (12) of the base body (4) at a tooth to be wound (3) by means of a needle-shaped nozzle (7) that is attached at a nail support (6) of a nail winding head (5), wherein the start position is arranged at a groove (10) inside of which the wire (8) is to be placed, and wherein the nozzle (7) is arranged closer to the tooth to be wound (3) than to an adjacent tooth (3) that delimits the groove (10),
• moving the nail winding head (5) along the groove (10) to place the wire (8) inside the groove (10), wherein the alignment of the nozzle (7) remains unchanged, and
• placing the wire (8) at a target position at a second front side (13) that is located opposite the first front side (12), wherein a target location of the wire (8) inside the groove (10) is defined by the start position and the target position,
**characterized in that**
• the wire (8) is placed at the start position at the first front side (12) of the base body (4) by means of a pin-shaped retaining finger (9), wherein the nail winding head (5) remains outside of the groove (10),
• the nail winding head (5) remains outside of the groove (10) when it is moved along the groove (10) to place the wire (8) inside the groove (10), and
• the wire (8) is placed at the target position at the second front side (13) by means of a further pin-shaped retaining finger (9), wherein the nail winding head (5) remains outside of the groove, wherein the retaining fingers (9) are mechanically coupled such that the retaining fingers (9) are fixedly attached to each other and not movable with respect to each other.

6. Method according to claim 5, **characterized in that** the nozzle (8) is aligned for placing the wire (8) at the start position and/or for moving the nail winding head (5) in parallel to a side surface of the tooth to be wound (3) that delimits the groove (10).

7. Method according to claim 5 or 6, **characterized in that** the nozzle (7) is rotated about a processing axis (100) relative to the base body (4) by the nail support (6) and is linearly displaced perpendicular to the processing axis (100), and wherein in particular the base body (4) is rotated about a rotational axis that is parallel to the processing axis (100) to arrange the nozzle (7) closer to the side surface of the tooth to be wound (3) than to the adjacent tooth (3) that is located opposite the side surface.

8. Method according to any one of claims 5 to 7, **characterized in that**, following the placement of the wire (8) at the target position at the second front side (13), the following steps are performed:
• moving the nail winding head (5) to an adjacent groove (10),
• placing the wire (8) at a start position at the second front side (13) of the base body (4) by means of the further retaining finger (9), wherein the nail winding head (5), in particular the nozzle (7), remains outside of the adjacent groove (10),
• moving the nail winding head (5) in parallel to the adjacent groove (10), wherein the nail winding head (5), in particular the nozzle (7), remains outside of the adjacent groove (10) to place the wire (8) inside the adjacent groove (10), and
• placing the wire (8) at a target position at the first front side (12) by means of the retaining finger (9), wherein the nail winding head (5), in particular the nozzle (7), remains outside of the adjacent groove (10), and wherein a target location of the wire (8) inside the adjacent groove (10) is defined by the start position and the target position.

9. Method for manufacturing a winding (2) on teeth (3) of a base body (4) by means of a winding machine (1) according to any one of claims 1 to 4, wherein at first at least one bottom winding is applied to a tooth (3) of the base body (4), and subsequently a top winding is applied to the bottom winding, comprising the steps of:
• placing the wire (8) at a start position of a groove (10) on a first front side (12) of the base body (4) by means of the nail winding head (5),
• moving the nail winding head (5) in parallel to the groove (10) to a second front side (13) of the base body (4) that is located opposite the first front side (12) to place the wire (8) inside the groove (10) at a target location, wherein the nail winding head (5), in particular the nozzle (7), at least partially engages with the groove (10),
• moving the nail winding head (5) at the second front side (13) to an adjacent groove (10), and moving the nail winding head (5) back to the first front side (12) in parallel to the adjacent groove (10) in order to place the wire (8) inside the adjacent groove (10) at a target location, wherein the nail winding head (5), in particular the nozzle (7), engages at least partially with the groove (10),
• placing the wires (8) at a next start position of the groove (10) at the first front side (12) of the base body (4) by means of the nail winding head (5),
• repeating all steps of the method and of the placement until all windings of the bottom winding are created,
• winding the top winding according to the method according to any of the claims 7 to 8.

## Revendications

1. Machine d'enroulement (1) comprenant
• un élément de réception (11) pour la réception d'un corps de base (4) comprenant des dents (3), sur lesquelles un enroulement (2) est à enrouler,
• une tête d'enroulement à aiguille (5), à travers laquelle un fil (8) peut être guidé parallèlement à une surface de chaque dent (3) à travers le corps de base (4), afin de déposer le fil (8) à l'intérieur d'une rainure (10) entre deux dents (3) du corps de base (4), de sorte qu'une dent (3) à entourer de l'enroulement peut être entourée avec le fil (8),
• dans laquelle la tête d'enroulement à aiguille (5) présente un support d'aiguille (6), sur lequel une buse (7) en forme d'aiguille est montée, par l'intermédiaire de laquelle un fil (8) à enrouler peut être distribué,
• dans laquelle la buse (7) peut être disposée de manière inclinée dans la rainure (10), de sorte qu'une distance de la buse (7) par rapport à la dent (3) à entourer de l'enroulement est plus petite que par rapport à une dent (3) voisine délimitant la rainure (10),
• **caractérisée par** au moins deux doigts de retenue (9) en forme de tige,
• dans laquelle les doigts de retenue (9) sont mobiles par rapport à l'élément de réception (11) dans trois directions spatiales (200, 300, 400) indépendantes,
• dans laquelle respectivement un doigt de retenue (9) peut être disposé sur respectivement une face frontale (12, 13) du corps de base (4),
• dans laquelle le fil (8) peut être positionné par chaque doigt de retenue (9) indépendamment de la tête d'enroulement à aiguille (5) à l'intérieur de la rainure (10), afin de fixer une situation cible du fil (8) à l'intérieur de la rainure (10), et
• dans laquelle les doigts de retenue (9) sont accouplés mécaniquement, ce qui a pour effet que les doigts de retenue (9) sont reliés fixement les uns aux autres et immobiles les uns par rapport aux autres.

2. Machine d'enroulement (1) selon la revendication 1, **caractérisée en ce que** la buse (8) peut être orientée parallèlement à une surface latérale délimitant la rainure (10) de la dent (3) à entourer de l'enroulement.

3. Machine d'enroulement (1) selon l'une quelconque des revendications précédentes, **caractérisée en ce que** la buse (7) peut être amenée en rotation par le support d'aiguille (6) par rapport à l'élément de réception (11) autour d'un axe d'usinage (100) et peut coulisser linéairement dans trois directions spatiales indépendantes le long de, ainsi que perpendiculairement à, l'axe d'usinage (100), dans laquelle le fil (8) peut être distribué par la buse (7) perpendiculairement à l'axe d'usinage (100), et dans laquelle l'élément de réception (11) peut être amené en rotation en particulier autour d'un axe de rotation parallèle à l'axe d'usinage (100).

4. Machine d'enroulement (1) selon l'une quelconque des revendications précédentes, **caractérisée en ce que** la buse (7) peut être guidée par le support d'aiguille (6) à l'extérieur de la rainure (10) et le doigt de retenue (9) pour le positionnement du fil (8) est conçu à l'intérieur de la rainure (10) pour la réalisation de l'enroulement (2) et/ou que la buse (7) peut être guidée par le support d'aiguille (6) à l'intérieur de la rainure (10), afin de positionner le fil (8) pour la réalisation de l'enroulement (2).

5. Procédé pour fabriquer un enroulement (2) sur des dents (3) d'un corps de base (4) comprenant les étapes :
• de placement d'un fil (8) au niveau d'une position de départ sur une première face frontale (12) du corps de base (4) sur une dent (3) à entourer de l'enroulement au moyen d'une buse (7) en forme d'aiguille, qui est montée sur un support d'aiguille (6) d'une tête d'enroulement à aiguille (5), dans lequel la position de départ est disposée sur une rainure (10), dans laquelle le fil (8) vise à être déposé, et dans lequel la buse (7) est disposée plus près de la dent (3) à entourer de l'enroulement que d'une dent (3) voisine délimitant la rainure (10),
• de déplacement de la tête d'enroulement à aiguille (5) le long de la rainure (10), pour déposer le fil (8) à l'intérieur de la rainure (10), dans lequel l'orientation de la buse (7) reste inchangée, et
• de placement du fil (8) au niveau d'une position cible sur une deuxième face frontale (13) opposée à la première face frontale (12), dans lequel une situation cible du fil (8) à l'intérieur de la rainure (10) est définie par la position de départ et position cible, **caractérisé en ce que** :
• le fil (8) au niveau de la position de départ est placé sur la première face frontale (12) du corps de base (4) au moyen d'un doigt de retenue (9) en forme de tige, dans lequel la tête d'enroulement à aiguille (5) reste à l'extérieur de la rainure (10),
• la tête d'enroulement à aiguille (5) reste à l'extérieur de la rainure (10), lorsque celle-ci est déplacée le long de la rainure (10), afin de déposer le fil (8) à l'intérieur de la rainure (10), et
• le fil (8) est placé au niveau de la position cible sur la deuxième face frontale (13) au moyen d'un autre doigt de retenue (9) en forme de tige, dans lequel la tête d'enroulement à aiguille (5) reste à l'extérieur de la rainure (10), dans lequel les doigts de retenue (9) sont accouplés mécaniquement, ce qui a pour effet que les doigts de retenue (9) sont reliés fixement les uns aux autres et immobiles les uns par rapport aux autres.

6. Procédé selon la revendication 5, **caractérisé en ce que** la buse (8) pour le placement du fil (8) au niveau de la position de départ et/ou pour le déplacement de la tête d'enroulement à aiguille (5) est orientée parallèlement à une surface latérale délimitant la rainure (10) de la dent (3) à entourer de l'enroulement.

7. Procédé selon la revendication 5 ou 6, **caractérisé en ce que** la buse (7) est amenée en rotation par le support d'aiguille (6) par rapport au corps de base (4) autour d'un axe d'usinage (100) et amenée à coulisser linéairement perpendiculairement à l'axe d'usinage (100), et dans lequel en particulier le corps de base (4) est amené en rotation autour d'un axe de rotation parallèle à l'axe d'usinage (100), afin de disposer la buse (7) plus près de la surface latérale de la dent (3) à entourer de l'enroulement que de la dent (3) voisine opposée à la surface latérale.

8. Procédé selon l'une quelconque des revendications 5 à 7, **caractérisé en ce qu'**après le placement du fil (8) au niveau de la position cible sur la deuxième face frontale (13) les étapes suivantes sont réalisées :
• déplacement de la tête d'enroulement à aiguille (5) vers une rainure (10) voisine,
• placement du fil (8) au niveau d'une position de départ sur la deuxième face frontale (13) du corps de base (4) au moyen de l'autre doigt de retenue (9), dans lequel la tête d'enroulement à aiguille (5), en particulier la buse (7), reste à l'extérieur de la rainure (10) voisine,
• déplacement de la tête d'enroulement à aiguille (5) parallèlement à la rainure (10) voisine, dans lequel la tête d'enroulement à aiguille (5), en particulier la buse (7), reste à l'extérieur de la rainure (10) voisine, afin de déposer le fil (8) à l'intérieur de la rainure (10) voisine et
• placement du fil (8) au niveau d'une position cible sur la première face frontale (12) au moyen du doigt de retenue (9), dans lequel la tête d'enroulement à aiguille (5), en particulier la buse (7), reste à l'extérieur de la rainure (10) voisine et dans lequel une situation cible du fil (8) à l'intérieur de la rainure (10) voisine est définie par la position de départ et position cible.

9. Procédé pour fabriquer un enroulement (2) sur des dents (3) d'un corps de base (4) au moyen d'une machine d'enroulement (1) selon l'une quelconque des revendications 1 à 4, dans lequel tout d'abord au moins un enroulement inférieur est appliqué sur une dent (3) du corps de base (4) et ensuite un enroulement supérieur sur l'enroulement inférieur, comprenant les étapes :
• de placement du fil (8) au niveau d'une position de départ d'une rainure (10) sur une première face frontale (12) du corps de base (4) au moyen de la tête d'enroulement à aiguille (5),
• de déplacement de la tête d'enroulement à aiguille (5) parallèlement à la rainure (10) vers une deuxième face frontale (13) du corps de base (4) opposée à la première face frontale (12), afin de déposer le fil (8) à l'intérieur de la rainure (10) au niveau d'une situation cible, dans lequel la tête d'enroulement à aiguille (5), en particulier la buse (7), s'insère au moins en partie dans la rainure (10),
• de déplacement de la tête d'enroulement à aiguille (5) sur la deuxième face frontale (13) vers une rainure (10) voisine et déplacement de la tête d'enroulement à aiguille (5) parallèlement à la rainure (10) voisine à nouveau vers la première face frontale (12), afin de déposer le fil (8) à l'intérieur de la rainure (10) voisine au niveau d'une situation cible, dans lequel la tête d'enroulement à aiguille (5), en particulier la buse (7), s'insère au moins en partie dans la rainure (10),
• de placement du fil (8) au niveau d'une position de départ la plus proche de la rainure (10) sur la première face frontale (12) du corps de base (4) au moyen de la tête d'enroulement à aiguille (5),
• de répétition des étapes citées du procédé et de placement jusqu'à ce que tous les enroulements de l'enroulement inférieur aient été produits,
• d'enroulement de l'enroulement supérieur selon le procédé selon l'une quelconque des revendications 5 à 8.
